# EUROPÄISCHE PATENTSCHRIFT

(11) **EP 1 393 971 B1**
(45) Veröffentlichungstag und Bekanntmachung des Hinweises auf die Patenterteilung: **04.07.2007**
(21) Anmeldenummer: 03018750.4
(22) Anmeldetag: 26.08.2003
(51) Int. Cl.: B60Q 1/14, F21V 7/00

(54) **Verfahren zum Steuern einer Scheinwerfereinheit für Fahrzeuge und Scheinwerfereinheit für Fahrzeuge**
Method to control a headlamp unit in a vehicle and vehicle headlamp unit
Procédé de contrôle d'un ensemble projecteur pour véhicule et ensemble projecteur pour véhicule

(30) Priorität: 29.08.2002 DE 10239837; 29.08.2002 DE 10239836
(43) Veröffentlichungstag der Anmeldung: 03.03.2004
(73) Patentinhaber: Volkswagen AG, 38436 Wolfsburg (DE)
(72) Erfinder: Wegner, Berend, 38446 Wolfsburg (DE); Ortmann, Frank, 38518 Gifhorn (DE); Schönfeld, Peter, 38544 Hillerse (DE); Von Hoffmann, Alexander, 38448 Wolfsburg (DE); Schwab, Gabriel, 38440 Wolfsburg (DE)
(74) Vertreter: Rabe, Andreas

(56) Entgegenhaltungen:
- DE-A1- 19 632 190
- US-B1- 6 176 605

## Beschreibung

Die vorliegende Erfindung betrifft ein Verfahren zum Steuern einer Scheinwerfereinheit für Fahrzeuge mit zumindest zwei Lichtquellen. Die Lichtemission der ersten Lichtquelle hat eine geringere Leuchtweite als die Lichtemission der zweiten Lichtquelle. Bei dem Verfahren erfolgt die Lichtemission durch die erste Lichtquelle zum Erzeugen einer ersten Lichtfunktion. Zum Erzeugen einer zweiten Lichtfunktion mit größerer Leuchtweite wird die zweite Lichtquelle zugeschaltet. Ferner betrifft die vorliegende Erfindung eine Scheinwerfereinheit für Fahrzeuge. Diese ist mit einer Steuereinheit gekoppelt und weist zumindest die zwei vorstehend bezeichneten Lichtquellen auf.

Herkömmliche Scheinwerfereinheiten umfassen Lichtquellen für ein Abblendlicht und ein Fernlicht. Das Abblendlicht ist so ausgelegt, dass es dem Fahrzeugführer eine möglichst gute Sicht ermöglicht und gleichzeitig die Blendung für den Gegenverkehr möglichst gering ist. Das Fernlicht ist so ausgelegt, dass eine möglichst große Leuchtweite erzielt wird, wobei eine mögliche Blendung des Gegenverkehrs in Kauf genommen wird. Mit dem Abblendlicht werden insbesondere im Vorfeld sehr hohe Lichtstärken erzielt. Außerdem weist die Ausleuchtung im Vorfeld eine ausgeprägte Homogenität auf.

Im Abblendbetrieb der Scheinwerfereinheit des Fahrzeugs sind diese Eigenschaften des Abblendlichts von Vorteil. Wird jedoch zum Bereitstellen eines Fernlichts eine zweite Lichtquelle dazugeschaltet, wirken sich die Eigenschaften des Abblendlichts negativ für den Fernlichtbetrieb aus. Das Fernlicht wird nämlich vom Fahrer kaum noch wahrgenommen, da im Fahrzeugvorfeld deutlich höhere Leuchtdichten vorhanden sind, als in der Ferne, in die der Fahrer beim Einschalten des Fernlichts sehen will. Das Auge des Fahrers hat Schwierigkeiten, sich an die geringere Leuchtdichte in der Ferne zu adaptieren. Aus diesem Grund werden in der Ferne aufkommende Hindernisse unzureichend wahrgenommen.

Dieses Problem könnte durch eine Anhebung der durch die Fernlichtquelle bereitgestellten Lichtstärke gelöst werden. Einer solchen Anhebung sind jedoch Grenzen gesetzt, da die Leistung der Fernlichtquelle nicht beliebig erhöht werden kann und außerdem gesetzliche Schranken für die Lichtstärken im Fernlichtbetrieb bestehen.

In der DE 196 32 190 A1 wird vorgeschlagen, dass bei der Umschaltung der Scheinwerferanlage von der Betriebsstellung für Abblendlicht auf die Betriebsstellung für Fernlicht der vom Scheinwerfer für Abblendlicht ausgesandte Lichtstrom reduziert wird und nach einem kurzen Zeitintervall wieder erhöht wird. Ein solches Verfahren hat jedoch den Nachteil, dass nach der Erhöhung der Lichtleistung für das Abblendlicht das Fernlicht unzureichend vom Fahrer wahrgenommen wird. DE 19632190 A1 beschreibt also die Merkmale des Oberbegriffs des Anspruchs 1.

Es ist daher die Aufgabe der vorliegenden Erfindung, die Wahrnehmung einer Lichtfunktion mit größerer Leuchtweite durch ein Verfahren zum Steuern einer Fahrzeugscheinwerfereinheit bzw. bei einer Scheinwerfereinheit für Fahrzeuge zu verbessern.

Diese Aufgabe wird erfindungsgemäß durch ein Verfahren mit den Merkmalen des Anspruchs 1 und eine Scheinwerfereinheit mit den Merkmalen des Anspruchs 11 gelöst. Vorteilhafte Weiter- und Ausbildungen ergeben sich aus den Unteransprüchen.

Das erfindungsgemäße Verfahren ist dadurch gekennzeichnet, dass die Leuchtdichte der Lichtemission der ersten Lichtquelle im Bereich des Fahrzeugvorfeldes reduziert wird, wenn die zweite Lichtquelle zugeschaltet wird und dass die Leuchtdichte der Lichtemission der ersten Lichtquelle im Bereich des Fahrzeugvorfeldes solange reduziert bleibt, wie die zweite Lichtquelle zugeschaltet ist. Bei der Änderung der Leuchtdichte wird insbesondere das Adaptionsvermögen des menschlichen Auges berücksichtigt.

Die Veränderung der Leuchtdichte der Lichtemission der ersten Lichtquelle im Bereich des Fahrzeugvorfeldes kann gemäß einer ersten Ausführungsform dadurch geschehen, dass die Leuchtdichte der Lichtemission der ersten Lichtquelle reduziert wird, wenn die zweite Lichtquelle zugeschaltet wird. Die Leuchtdichte der Lichtemission der ersten Lichtquelle wird insbesondere insgesamt reduziert.

Bei der durch die erste Lichtquelle bereitgestellten ersten Lichtfunktion kann es sich um ein Abblendlicht handeln, bei der durch die zweite Lichtquelle bereitgestellten zweiten Lichtfunktion um ein Fernlicht. Wird somit die Lichtquelle des Fernlichts der Lichtquelle des Abblendlichts zugeschaltet, wird die Leuchtdichte der Lichtemission der Abblendlichtquelle insgesamt reduziert. Hierdurch wird die Lichtstärke im Vorfeld des Fahrzeugs reduziert, wodurch eine verbesserte Wahrnehmung in der Ferne erreicht werden kann.

Vorzugsweise wird die Leuchtdichte der Lichtemission der ersten Lichtquelle derart reduziert, dass die Lichtemission für die Wahrnehmung in der Ferne durch ein optimiertes Verhältnis zwischen Leuchtdichte im Vorfeld und der Leuchtdichte in der Ferne angepasst wird. Die Reduktion der Lichtemission der ersten Lichtquelle erfolgt beispielsweise in Abhängigkeit von der durch die zweite Lichtquelle erzielten Lichtstärke in der Ferne. Die Reduktion der Leuchtdichte der Lichtemission der ersten Lichtquelle kann beispielsweise bis zu 50 % betragen. Bei der Geschwindigkeit, mit der die der Leuchtdichte der Lichtemission der ersten Lichtquelle verändert wird, wird insbesondere das Adaptionsvermögen des menschlichen Auges an veränderte Lichtverhältnisse berücksichtigt.

Gemäß einer vorteilhaften Ausgestaltung des erfindungsgemäßen Verfahrens wird die Leuchtdichte der Lichtemission der ersten Lichtquelle dadurch reduziert, dass die an der ersten Lichtquelle anliegende Effektiv-Spannung reduziert wird. Diese Ausgestaltung ist besonders einfach und kostengünstig zu realisieren, da nur die Ansteuerung der Spannungsquelle für die erste Lichtquelle angepasst werden muss.

Gemäß einer weiteren Ausführungsform des erfindungsgemäßen Verfahrens wird die Leuchtdichte der Lichtemission der ersten Lichtquelle im Bereich des Fahrzeugvorfeldes dadurch reduziert, dass die Leuchtweite der Lichtemission der ersten Lichtquelle erhöht wird, wenn die zweite Lichtquelle zugeschaltet wird, und die Leuchtweite der Lichtemission der ersten Lichtquelle kontinuierlich oder stufenweise abgesenkt, wenn die zweite Lichtquelle abgeschaltet wird. Wird beim Einschalten des Fernlichts die Fernlichtquelle der Abblendlichtquelle zugeschaltet, wird gleichzeitig die Leuchtweite der Abblendlichtquelle erhöht. Auf diese Weise ergibt sich eine insgesamt größere Leuchtweite und eine größere Lichtstärke in der Ferne. Ferner wird die Lichtstärke im Vorfeld des Fahrzeugs reduziert. Eine solche Vorfeldausleuchtung ist nämlich bei der Fernlichtfunktion nicht erforderlich bzw. unerwünscht. Außerdem wird die plötzliche Reduzierung der Leuchtweite beim Abschalten der zweiten Lichtquelle, d.h. der Fernlichtquelle, vermieden. Das menschliche Auge kann sich nämlich sehr schlecht an derart plötzliche Veränderungen der Leuchtweite anpassen. Eine unstetige Reduzierung der Leuchtweite wird daher als unangenehm und unsicher empfunden. Bei der kontinuierlichen oder stufenweisen Absenkung der Leuchtweite des Abblendlichts nach Abschalten der Fernlichtquelle kann sich das menschliche Auge langsam an die neue Leuchtweite anpassen.

Gemäß einer vorteilhaften Ausgestaltung der Erfindung wird die Leuchtweite der Lichtemission der ersten Lichtquelle dadurch verändert, dass das Scheinwerfermodul mit der ersten Lichtquelle um eine horizontale Achse geschwenkt wird. Die Verschwenkung kann über eine herkömmliche Leuchtweitenregulierung erfolgen. Das Scheinwerfermodul der ersten Lichtquelle kann um einen Winkel von bis zu 1° verschwenkt werden. Vorteilhafterweise ist der Schwenkwinkel in einem Bereich zwischen 0,15° und 0,57°. Besonders bevorzugt ist eine Verschwenkung um einen Winkel von 0,5°. Das erfindungsgemäße Verfahren kann daher sehr einfach und kostengünstig in Verbindung mit herkömmlichen Scheinwerfereinheiten mit Leuchtweitenregulierung verwirklicht werden.

Die Veränderung der Leuchtweite der Lichtemission der ersten Lichtquelle in Abhängigkeit vom Zu- und Abschalten der zweiten Lichtquelle erfolgt vorteilhafterweise durch eine Softwareansteuerung der Leuchtweitenregulierung des Scheinwerfermoduls mit der ersten Lichtquelle. Auch durch diese Softwarelösung lässt sich das erfindungsgemäße Verfahren einfach und kostengünstig bei herkömmlichen Scheinwerfereinheiten einsetzen.

Des Weiteren kann die Steuerung geschwindigkeitsabhängig erfolgen. Zum Beispiel kann die Leuchtweite der Lichtemission der ersten Lichtquelle nur dann erhöht werden, wenn eine für Autobahnfahrten typische Geschwindigkeit gefahren wird. Gemäß einer weiteren Ausgestaltung der Erfindung kann durch Sensoren die gerade befahrene Straßenkategorie bestimmt werden und die Scheinwerfereinheit in Abhängigkeit von dieser Straßenkategorie gesteuert werden. Zum Beispiel kann die Leuchtweite der Lichtemission der ersten Lichtquelle nur dann erhöht werden, wenn festgestellt wurde, dass eine Autobahn befahren wird.

Gemäß einer weiteren Ausgestaltung der vorliegenden Erfindung kann auch das Absenken der Leuchtweite der Lichtemission der ersten Lichtquelle, wenn die zweite Lichtquelle abgeschaltet wird, in Abhängigkeit von der gefahrenen Geschwindigkeit oder der befahrenen Straßenkategorie erfolgen. Beispielsweise kann die kontinuierliche oder stufenweise Absenkung der Leuchtweite nur dann erfolgen, wenn die gefahrene Geschwindigkeit über einer Grenzgeschwindigkeit ist oder das Befahren einer Autobahn detektiert wird. Wird diese Grenzgeschwindigkeit unterschritten oder wird keine Autobahn befahren, erfolgt die Absenkung der Leuchtweite im wesentlichen unstetig, d.h. plötzlich. Hierdurch kann vorteilhafterweise eine beim Befahren von Stadtstraßen oder Landstraßen besonders nachteilhafte Blendung des Gegenverkehrs verringert werden.

Die erfindungsgemäße Scheinwerfereinheit ist dadurch gekennzeichnet, dass durch die Steuereinheit die Leuchtdichte der Lichtemission der ersten Lichtquelle im Bereich des Fahrzeugvorfeldes beim Zuschalten der zweiten Lichtquelle reduzierbar ist, wobei die Reduktion der Leuchtdichte im Bereich des Fahrzeugsvorfeldes so lange angesteuert ist, wie die zweite Lichtquelle zugeschaltet ist. Gemäß einer ersten Ausführungsform ist durch die Steuereinheit die Leuchtdichte der Lichtemission der ersten Lichtquelle beim Zuschalten der zweiten Lichtquelle insgesamt reduzierbar. Gemäß einer Weiterbildung weist die Steuereinheit eine Spannungsversorgung für zumindest die erste Lichtquelle auf, wobei die Leuchtdichte der Lichtemission der ersten Lichtquelle durch eine Verringerung der an der ersten Lichtquelle anliegenden Effektiv-Spannung reduzierbar ist.

Gemäß einer weiteren Ausführungsform der erfindungsgemäßen Scheinwerfereinheit ist durch die Steuereinheit die Leuchtweite der Lichtemission der ersten Lichtquelle beim Zuschalten der zweiten Lichtquelle vergrößerbar und die Leuchtweite der Lichtemission der ersten Lichtquelle beim Abschalten der zweiten Lichtquelle kontinuierlich oder stufenweise absenkbar. Beispielsweise kann die Leuchtweitenregulierung einen Stellmotor umfassen, durch den das Scheinwerfermodul mit der ersten Lichtquelle um eine horizontale Achse verschwenkbar ist und der von der Steuereinheit ansteuerbar ist.

Die erste Lichtquelle ist insbesondere eine Abblendlicht-Lichtquelle, die zweite Lichtquelle insbesondere eine Fernlicht-Lichtquelle.

Die Erfindung wird nun anhand von zwei Ausführungsbeispielen mit Bezug zu den Zeichnungen erläutert.

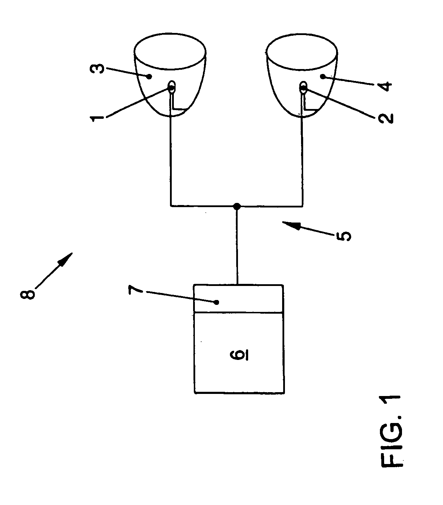

Figur 1 zeigt schematisch die erfindungsgemäße Scheinwerfereinheit gemäß dem ersten Ausführungsbeispiel und

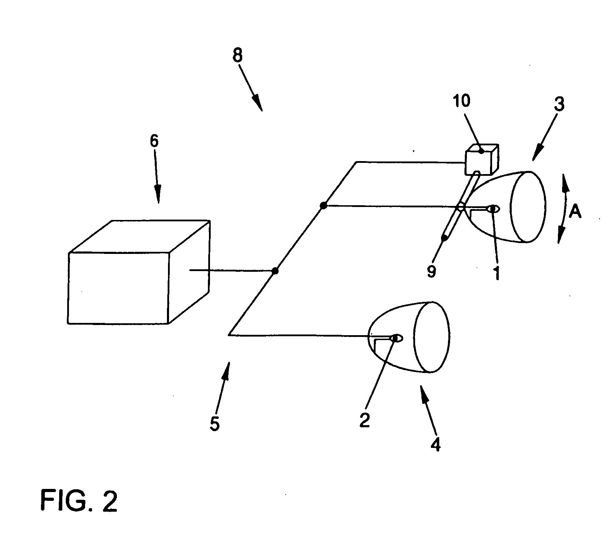

Figur 2 zeigt schematisch die erfindungsgemäße Scheinwerfereinheit gemäß dem zweiten Ausführungsbeispiel.

Im Folgenden wird das erste Ausführungsbeispiel beschrieben:

Die Scheinwerfereinheit 8 weist eine erste Lichtquelle 1 und eine zweite Lichtquelle 2 auf. Die Lichtquelle 1 ist in einem Scheinwerfermodul 3, die Lichtquelle 2 in einem Scheinwerfermodul 4 untergebracht. Bei der Scheinwerfereinheit 8 sowie den Scheinwerfermodulen 3 und 4 kann es sich um an sich bekannte Scheinwerfereinheiten zum Bereitstellen eines Abblendlichts und eines Fernlichts handeln. Die Lichtemission der ersten Lichtquelle 1 hat somit eine geringere Leuchtweite, als die Lichtemission der zweiten Lichtquelle 2. Bei der Abblend-Lichtfunktion emittiert nur die erste Lichtquelle 1 Licht. Bei der Fernlicht-Lichtfunktion wird die zweite Lichtquelle 2 zugeschaltet, so dass die Lichtemission über beide Lichtquellen 1 und 2 erfolgt. Außerdem sind bei dem Fahrzeug insgesamt zwei Scheinwerfereinheiten 8 vorgesehen, eine Einheit auf der linken Seite des Fahrzeugs, eine Einheit auf der rechten Seite.

Die Lichtverteilung der Lichtemission der beiden Lichtquellen 1 und 2 ist verschieden. Die erste Lichtquelle 1 stellt, wie beim Abblendlicht, eine besonders helle und homogene Ausleuchtung im Vorfeld bereit. Die zweite Lichtquelle 2 stellt, wie beim Fernlicht, eine besonders große Leuchtweite bereit.

Die Scheinwerfermodule 3 und 4 sind über elektrische Leitungen 5 mit einer Steuereinheit 6 verbunden, die wiederum mit der allgemeinen Steuerelektronik des Fahrzeugs in Verbindung steht. Die Steuereinheit 6 umfasst eine Spannungsversorgung 7, mit der die an der ersten Lichtquelle 1 und die an der zweiten Lichtquelle 2 anliegende Effektiv-Spannung separat gesteuert werden kann. Durch Veränderungen der Effektiv-Spannungen können die Lichtquellen 1 und 2 zum einen ein- und ausgeschaltet werden, zum anderen kann die Lichtemission insbesondere ersten Lichtquelle 1 reduziert bzw. erhöht werden.

Die Steuerung der Scheinwerfereinheit 8 erfolgt wie folgt:

Beim Einschalten des Abblendlichts wird die Lichtquelle 1 von der Steuereinheit 6 so angesteuert, dass eine Lichtemission gemäß der Abblendlichtfunktion erfolgt. Die Lichtquelle 2 ist in diesem Fall nicht eingeschaltet. Falls die Fernlichtfunktion bereitgestellt werden soll, wird die Lichtquelle 2 durch das Steuereinheit 6 der Lichtquelle 1 zugeschaltet. Bei der Fernlichtfunktion emittieren somit beide Lichtquellen 1 und 2 Licht. Gleichzeitig wird jedoch die Leuchtdichte der Lichtemission der ersten Lichtquelle 1 reduziert, wenn die zweite Lichtquelle 2 zugeschaltet wird. Hierfür verringert das Steuereinheit 6 die an der ersten Lichtquelle 1 anliegende Effektiv-Spannung. Die Spannungsreduktion erfolgt derart, dass ein optimiertes Verhältnis zwischen der Leuchtdichte im Vorfeld und der Leuchtdichte in der Ferne eingestellt wird, so dass eine besonders vorteilhafte Lichtemission für die Wahrnehmung in der Ferne bereitgestellt wird. Der Betrag, um den die Leuchtdichte der Lichtemission der ersten Lichtquelle 1 reduziert wird, hängt von den Ausgestaltungen der beiden Lichtquellen 1 und 2 ab. Wird beispielsweise eine Fernlicht-Lichtquelle 2 gewählt, deren Leuchtdichte sehr hoch ist und eine Abblend-Lichtquelle 1 gewählt, die eine normale Leuchtdichte aufweist, reicht eine geringe Reduzierung der Leuchtdichte der Lichtemission der Abblend-Lichtquelle 1 aus. Wird dagegen eine sehr starke Abblend-Lichtquelle 1 verwendet, die insbesondere eine intensive Vorfeldausleuchtung bereitstellt, und wird gleichzeitig eine normale Fernlicht-Lichtquelle 2 eingesetzt, wie z. B. eine Halogenleuchte, wird die Lichtemission der Abblend-Lichtquelle 1 stärker reduziert. In einem solchen Fall kann die Reduktion bis zu 50 % des Wertes betragen, der von der ersten Lichtquelle 1 beim Abblendlichtbetrieb bereitgestellt wird.

Die Leuchtdichte der Lichtemission der ersten Lichtquelle 1 bleibt solange reduziert, wie die zweite Lichtquelle 2 zugeschaltet ist. Wird die Fernlichtquelle 2 wieder abgeschaltet, wird die Leuchtdichte der Abblendlichtquelle 1 wieder erhöht. Dies erfolgt nicht sprunghaft, sondern kontinuierlich oder stufenweise, wobei das Adaptionsvermögen des menschlichen Auges bei der Erhöhung der Lichtleistung berücksichtigt wird.

Im Folgenden wird das zweite Ausführungsbeispiel beschrieben:

Wie bei ersten Ausführungsbeispiel weist die Scheinwerfereinheit 8 eine erste Lichtquelle 1 in einem Scheinwerfermodul 3 und eine zweite Lichtquelle 2 in einem Scheinwerfermodul 4 auf. Die Lichtverteilung der Lichtemission der beiden Lichtquellen 1 und 2 ist verschieden. Die erste Lichtquelle 1 stellt, wie beim Abblendlicht, eine besonders helle und homogene Ausleuchtung im Vorfeld bereit. Die zweite Lichtquelle 2 stellt, wie beim Fernlicht, eine besonders große Leuchtweite bereit.

Das Scheinwerfermodul 3 mit der ersten Lichtquelle 1 ist zur Veränderung der Leuchtweite um eine horizontale Achse 9 schwenkbar. Die Schwenkbewegung ist in der Figur durch den Pfeil A angedeutet. Die Achse 9 kann mittels des Stellmotors 10 zum Verschwenken des Scheinwerfermoduls 3 gedreht werden. Die Ansteuerung des Stellmotors 10 erfolgt über die Steuereinheit 6. Die Leuchtweite des Scheinwerfermoduls 3 kann jedoch auch über andere bekannte Leuchtweitenregulierungen gesteuert werden.

Die Scheinwerfermodule 3 und 4 sind über elektrische Leitungen 5 mit einer Steuereinheit 6 verbunden, die wiederum mit der allgemeinen Steuerelektronik des Fahrzeugs in Verbindung steht. Ferner steht der Stellmotor 10 der Steuereinheit 6 in Verbindung. Die Steuereinheit 6 kann somit die Leuchtweite der Lichtemission der ersten Lichtquelle 1 steuern.

Im Folgenden wird das Verfahren zum Steuern der Scheinwerfereinheit 8 beschrieben:

Beim Einschalten des Abblendlichts wird die Lichtquelle 1 von der Steuereinheit 6 so angesteuert, dass eine Lichtemission gemäß der Abblendlichtfunktion erfolgt. Die Lichtquelle 2 ist in diesem Fall nicht eingeschaltet. Falls die Fernlichtfunktion bereitgestellt werden soll, wird die Lichtquelle 2 durch das Steuereinheit 6 der Lichtquelle 1 zugeschaltet. Bei der Fernlichtfunktion emittieren somit beide Lichtquellen 1 und 2 Licht. Gleichzeitig wird beim Zuschalten der zweiten Lichtquelle 2 die Leuchtweite der Lichtemission der ersten Lichtquelle 1 erhöht. Hierfür wird mittels des Stellmotors 10 das Scheinwerfermodul 3 um die Achse 9 nach oben verschwenkt. Das Scheinwerfermodel 3 kann bis zu einem Winkel von 1° nach oben verschwenkt werden. Normalerweise liegt der Schwenkwinkel in einem Bereich zwischen 0,15° und 0,57°, im vorliegenden Ausführungsbeispiel wurde ein Schwenkwinkel von 0,5° gewählt.

Die Leuchtweite der Lichtemission der ersten Lichtquelle 1 bleibt so lange erhöht, wie die zweite Lichtquelle 2 zugeschaltet ist. Beim Zurückschalten von der Fernlichtfunktion auf die Abblendlichtfunktion wird die zweite Lichtquelle 2 abgeschaltet. Gleichzeitig wird die Leuchtweite der Lichtemission der ersten Lichtquelle 1 wieder erniedrigt. Dies erfolgt jedoch nicht plötzlich, sondern kontinuierlich oder stufenweise. Die Geschwindigkeit der Absenkung der Leuchtweite richtet sich nach dem Adaptionsvermögen des menschlichen Auges, sich an unterschiedliche Leuchtweiten anzupassen.

Gemäß einem weiteren Ausführungsbeispiel wird die Geschwindigkeit des Fahrzeugs ermittelt und an die Steuereinheit 6 übertragen. In der Steuereinheit 6 ist eine Grenzgeschwindigkeit gespeichert. Beispielsweise kann diese Grenzgeschwindigkeit 100 km/h betragen, so dass ein Überschreiten dieser Grenzgeschwindigkeit anzeigt, dass mit großer Wahrscheinlichkeit eine Autobahn befahren wird. Gemäß diesem zweiten Ausführungsbeispiel wird die Leuchtweite der ersten Lichtquelle nur dann erhöht, wenn die detektierte Geschwindigkeit größer als die Grenzgeschwindigkeit ist.

Gemäß einem weiteren Ausführungsbeispiel wird von Sensoren des Fahrzeugs die gerade befahrene Straßenkategorie ermittelt und diese der Steuereinheit 6 übertragen. In diesem Fall wird die Leuchtweite der ersten Lichtquelle nur dann erhöht, wenn eine bestimmte Straßenkategorie, z.B. eine Autobahn, befahren wird.

Gemäß einer weiteren Ausgestaltung der vorstehend beschriebenen Ausführungsbeispiele erfolgt das Absenken der Leuchtweite der ersten Lichtquelle 1, wenn die zweite Lichtquelle 2 abgeschaltet wird, auch geschwindigkeits- oder Straßenkategorie abhängig. Ein kontinuierliches bzw. stufenweises Absenken der Leuchtweite der Lichtemission der ersten Lichtquelle 1 erfolgt nur dann, wenn eine für Autobahnfahrten typische Geschwindigkeit gefahren wird bzw. das Befahren einer Autobahn detektiert wird. Ansonsten erfolgt das Absenken im wesentlichen unstetig, d.h. die Leuchtweite wird sehr rasch abgesenkt.

## Patentansprüche

1. Verfahren zum Steuern einer Scheinwerfereinheit (8) für Fahrzeuge mit zumindest zwei Lichtquellen (1, 2), wobei die Lichtemission der ersten Lichtquelle (1) eine geringere Leuchtweite als die Lichtemission der zweiten Lichtquelle (2) besitzt, bei dem:
zum Erzeugen einer ersten Lichtfunktion die Lichtemission durch die erste Lichtquelle (1) erfolgt und zum Erzeugen einer zweiten Lichtfunktion mit größerer Reichweite die zweite Lichtquelle (2) zugeschaltet wird,
**dadurch gekennzeichnet, dass** die Leuchtdichte der Lichtemission der ersten Lichtquelle (1) im Bereich des Fahrzeugvorfeldes reduziert wird, wenn die zweite Lichtquelle (2) zugeschaltet wird und dass die Leuchtdichte der Lichtemission der ersten Lichtquelle (1) im Bereich des Fahrzeugvorfeldes solange reduziert bleibt, wie die zweite Lichtquelle (2) zugeschaltet ist.

2. Verfahren nach Anspruch 1, **dadurch gekennzeichnet, dass** bei der Änderung der Leuchtdichte der Lichtemission der ersten Lichtquelle (1) das Adaptionsvermögen des menschlichen Auges berücksichtigt wird.

3. Verfahren nach Anspruch 1 oder 2, **dadurch gekennzeichnet, dass** die Leuchtdichte der Lichtemission der ersten Lichtquelle (1) im Bereich des Fahrzeugvorfeldes dadurch reduziert wird, dass die Leuchtdichte der Lichtemission der ersten Lichtquelle (1) insgesamt reduziert wird, wenn die zweite Lichtquelle (2) zugeschaltet wird.

4. Verfahren nach Anspruch 3 **dadurch gekennzeichnet, dass** die Leuchtdichte der Lichtemission der ersten Lichtquelle (1) dadurch reduziert wird, dass die an der ersten Lichtquelle (1) anliegende Effektiv-Spannung reduziert wird.

5. Verfahren nach einem der vorstehenden Ansprüche, **dadurch gekennzeichnet, dass** die Leuchtdichte der Lichtemission der ersten Lichtquelle (1) im Bereich des Fahrzeugvorfeldes dadurch reduziert wird, dass die Leuchtweite der Lichtemission der ersten Lichtquelle (1) erhöht wird, wenn die zweite Lichtquelle (2) zugeschaltet wird, und dass die Leuchtweite der Lichtemission der ersten Lichtquelle kontinuierlich oder stufenweise abgesenkt wird, wenn die zweite Lichtquelle (2) abgeschaltet wird.

6. Verfahren nach Anspruch 5, **dadurch gekennzeichnet, dass** die Veränderung der Leuchtweite der Lichtemission der ersten Lichtquelle (1) in Abhängigkeit vom Zu- und Abschalten der zweiten Lichtquelle (2) durch eine Softwareansteuerung der Leuchtweitenregulierung des Scheinwerfermoduls (3) mit der ersten Lichtquelle (1) erfolgt.

7. Verfahren nach Anspruch 5 oder 6, **dadurch gekennzeichnet, dass** die Steuerung der Leuchtweite der Lichtemission der ersten Lichtquelle (1) geschwindigkeitsabhängig erfolgt.

8. Verfahren nach Anspruch 7, **dadurch gekennzeichnet, dass** detektiert wird, welche Straßenkategorie befahren wird, und die Leuchtweite der Lichtemission der ersten Lichtquelle (1) nur dann erhöht und/oder erniedrigt wird, wenn eine bestimmte Straßenkategorie befahren wird.

9. Verfahren nach einem der vorstehenden Ansprüche, **dadurch gekennzeichnet, dass** durch die erste Lichtfunktion ein Abblendlicht bereitgestellt wird.

10. Verfahren nach einem der vorstehenden Ansprüche, **dadurch gekennzeichnet, dass** durch die zweite Lichtfunktion ein Fernlicht bereitgestellt wird.

11. Scheinwerfereinheit (8) für Fahrzeuge, die mit einer Steuereinheit (6) gekoppelt ist, mit zumindest zwei Lichtquellen (1, 2), wobei die Lichtemission der ersten Lichtquelle eine geringere Leuchtweite als die Lichtemission der zweiten Lichtquelle hat und zum Erzeugen einer Lichtfunktion mit großer Reichweite die zweite Lichtquelle (2) zu der ersten Lichtquelle (1) zugeschaltet wird, und einer Leuchtweitenregulierung (7, 9) zum Verändern der Leuchtweite der Lichtemission zumindest der ersten Lichtquelle (1),
**dadurch gekennzeichnet,**
**dass** durch die Steuereinheit die Leuchtdichte der Lichtemission der ersten Lichtquelle (1) im Bereich des Fahrzeugvorfeldes beim Zuschalten der zweiten Lichtquelle (2) reduziert wird, wobei die Reduktion der Leuchtdichte im Bereich des Fahrzeugvorfeldes solange angesteuert ist, wie die zweite Lichtquelle (2) zugeschaltet ist.

12. Scheinwerfereinheit (8) nach Anspruch 11, **dadurch gekennzeichnet, dass** durch die Steuereinheit (6) die Leuchtdichte der Lichtemission der ersten Lichtquelle (1) beim Zuschalten der zweiten Lichtquelle (2) insgesamt reduzierbar ist.

13. Scheinwerfereinheit nach Anspruch 12, **dadurch gekennzeichnet, dass** die Steuereinheit (6) eine Spannungsversorgung (10) für zumindest die erste Lichtquelle (1) aufweist und die Leuchtdichte der Lichtemission der ersten Lichtquelle (1) durch eine Verringerung der an der ersten Lichtquelle (1) anliegenden Effektiv-Spannung reduzierbar ist.

14. Scheinwerfereinheit (8) nach einem der Ansprüche 11 bis 13, **dadurch gekennzeichnet, dass** durch die Steuereinheit die Leuchtweite der Lichtemission der ersten Lichtquelle (1) beim Zuschalten der zweiten Lichtquelle (2) vergrößerbar ist und dass die Leuchtweite der Lichtemission der ersten Lichtquelle (1) beim Abschalten der zweiten Lichtquelle (2) kontinuierlich oder stufenweise absenkbar ist.

## Claims

1. Method for controlling a headlamp unit (8) for vehicles having at least two light sources (1, 2), the light emission from the first light source (1) having a smaller luminous range than the light emission from the second light source (2), in which:
in order to produce a first light function, the light emission takes place by means of the first light source (1), and, in order to produce a second light function with a larger range, the second light source (2) is connected,
**characterized in that** the luminance of the light emission from the first light source (1) in the region in front of the vehicle is reduced if the second light source (2) is connected, and **in that** the luminance of the light emission from the first light source (1) in the region in front of the vehicle continues to be reduced as long as the second light source (2) is connected.

2. Method according to Claim 1, **characterized in that** the capacity of the human eye to adapt is taken into consideration when changing the luminance of the light emission from the first light source (1).

3. Method according to Claim 1 or 2, **characterized in that** the luminance of the light emission from the first light source (1) in the region in front of the vehicle is reduced by virtue of the fact that the luminance of the light emission from the first light source (1) is overall reduced if the second light source (2) is connected.

4. Method according to Claim 3, **characterized in that** the luminance of the light emission from the first light source (1) is reduced by virtue of the fact that the rms voltage applied to the first light source (1) is reduced.

5. Method according to one of the preceding claims, **characterized in that** the luminance of the light emission from the first light source (1) in the region in front of the vehicle is reduced by virtue of the fact that the luminous range of the light emission from the first light source (1) is increased if the second light source (2) is connected, and **in that** the luminous range of the light emission from the first light source is decreased continuously or stepwise if the second light source (2) is disconnected.

6. Method according to Claim 5, **characterized in that** the change in the luminous range of the light emission from the first light source (1) takes place as a function of the connection and disconnection of the second light source (2) by activating, by means of software, the luminous-range regulation of the headlamp module (3) with the first light source (1).

7. Method according to Claim 5 or 6, **characterized in that** the control of the luminous range of the light emission from the first light source (1) takes place as a function of the speed.

8. Method according to Claim 7, **characterized in that** the roadway category on which the vehicle is travelling is detected, and the luminous range of the light emission from the first light source (1) is only increased and/or lowered when a specific roadway category is being travelled on.

9. Method according to one of the preceding claims, **characterized in that** a dipped beam is provided by the first light function.

10. Method according to one of the preceding claims, **characterized in that** a main beam is provided by the second light function.

11. Headlamp unit (8) for vehicles which is coupled to a control unit (6) and having at least two light sources (1, 2), the light emission from the first light source having a smaller luminous range than the light emission from the second light source and, in order to produce a light function having a large range, the second light source (2) is connected to the first light source (1), and having a luminous range regulation system (7, 9) for changing the luminous range of the light emission from at least the first light source (1), **characterized in that** the luminance of the light emission from the first light source (1) in the region in front of the vehicle is reduced by the control unit when the second light source (2) is connected, the reduction in the luminance in the region in front of the vehicle being activated as long as the second light source (2) is connected.

12. Headlamp unit (8) according to Claim 11, **characterized in that** the luminance of the light emission from the first light source (1) can overall be reduced by the control unit (6) when the second light source (2) is connected.

13. Headlamp unit according to Claim 12, **characterized in that** the control unit (6) has a voltage supply (10) for at least the first light source (1), and the luminance of the light emission from the first light source (1) can be reduced by a reduction in the rms voltage applied to the first light source (1).

14. Headlamp unit (8) according to one of Claims 11 to 13, **characterized in that** the luminous range of the light emission from the first light source (1) can be increased by the control unit when the second light source (2) is connected, and **in that** the luminous range of the light emission from the first light source (1) can be reduced continuously or stepwise when the second light source (2) is disconnected.

## Revendications

1. Procédé de commande d'un ensemble projecteur (8) pour véhicules, comportant au moins deux sources de lumière (1, 2), dans lequel l'émission de lumière de la première source de lumière (1) a une portée d'éclairage moindre que l'émission de lumière de la deuxième source de lumière (2), dans lequel, pour produire une première fonction lumineuse, l'émission de lumière est effectuée par la première source de lumière (1) et pour produire une deuxième fonction lumineuse de plus grande portée, on active la deuxième source de lumière (2), **caractérisé en ce que** l'on réduit la luminance de l'émission de lumière de la première source de lumière (1) dans la région située devant le véhicule lorsque l'on active la deuxième source de lumière (2), et **en ce que** l'on maintient la réduction de la luminance de l'émission de lumière de la première source de lumière (1) dans la région située devant le véhicule aussi longtemps que la deuxième source de lumière (2) est activée.

2. Procédé selon la revendication 1, **caractérisé en ce que** l'on tient compte du pouvoir d'adaptation de l'oeil humain lorsque l'on fait varier la luminance de l'émission de lumière de la première source de lumière (1).

3. Procédé selon la revendication 1 ou 2, **caractérisé en ce que** l'on réduit la luminance de l'émission de lumière de la première source de lumière (1) dans la région située devant le véhicule en réduisant globalement la luminance de l'émission de lumière de la première source de lumière (1) lorsque l'on active la deuxième source de lumière (2).

4. Procédé selon la revendication 3, **caractérisé en ce que** l'on réduit la luminance de l'émission de lumière de la première source de lumière (1) en réduisant la tension effective appliquée à la première source de lumière (1).

5. Procédé selon l'une quelconque des revendications précédentes, **caractérisé en ce que** l'on réduit la luminance de l'émission de lumière de la première source de lumière (1) dans la région située devant le véhicule en augmentant la portée d'éclairage de l'émission de lumière de la première source de lumière (1), lorsque l'on active la deuxième source de lumière (2), et **en ce que** l'on abaisse en continu ou graduellement la portée d'éclairage de l'émission de lumière de la première source de lumière (1) lorsque l'on désactive la deuxième source de lumière (2).

6. Procédé selon la revendication 5, **caractérisé en ce que** l'on effectue la variation de la portée d'éclairage de l'émission de lumière de la première source de lumière (1) en fonction de l'activation et de la désactivation de la deuxième source de lumière (2) par une commande informatisée de la régulation de la portée d'éclairage du module de projecteur (3) avec la première source de lumière (1).

7. Procédé selon la revendication 5 ou 6,
**caractérisé en ce que** l'on effectue la commande de la portée d'éclairage de l'émission de lumière de la première source de lumière (1) en fonction de la vitesse.

8. Procédé selon la revendication 7, **caractérisé en ce que** l'on détecte la catégorie de route parcourue, et on augmente et/ou on diminue la portée d'éclairage de l'émission de lumière de la première source de lumière (1) lorsque l'on parcourt une catégorie de route déterminée.

9. Procédé selon l'une quelconque des revendications précédentes, **caractérisé en ce que** l'on allume les feux de croisement par la première fonction lumineuse.

10. Procédé selon l'une quelconque des revendications précédentes, **caractérisé en ce que** l'on allume les feux de route par la deuxième fonction lumineuse.

11. Ensemble projecteur (8) pour véhicules, qui est couplé à une unité de commande (6), comportant au moins deux sources de lumière (1, 2), dans lequel l'émission de lumière de la première source de lumière a une portée d'éclairage moindre que l'émission de lumière de la deuxième source de lumière et, pour produire une fonction lumineuse de grande portée, on active la deuxième source de lumière (2) en plus de la première source de lumière (1), et une régulation de la portée d'éclairage (7, 9) pour faire varier la portée d'éclairage de l'émission de lumière au moins de la première source de lumière (1), **caractérisé en ce que** la luminance de l'émission de lumière de la première source de lumière (1) dans la région située devant le véhicule est réduite par l'unité de commande lorsque l'on active la deuxième source de lumière (2), dans lequel la réduction de la luminance dans la région située devant le véhicule est actionnée aussi longtemps que la deuxième source de lumière (2) est activée.

12. Ensemble projecteur (8) selon la revendication 11, **caractérisé en ce que** la luminance de l'émission de lumière de la première source de lumière (1) peut être réduite globalement par l'unité de commande (6) lorsque l'on active la deuxième source de lumière (2).

13. Ensemble projecteur selon la revendication 12, **caractérisé en ce que** l'unité de commande (6) comprend une alimentation de tension (10) pour au moins la première source de lumière (1) et la luminance de l'émission de lumière de la première source de lumière (1) peut être réduite par une diminution de la tension effective appliquée à la première source de lumière (1).

14. Ensemble projecteur (8) selon l'une quelconque des revendications 11 à 13, **caractérisé en ce que** la portée d'éclairage de l'émission de lumière de la première source de lumière (1) peut être augmentée par l'unité de commande lors de l'activation de la deuxième source de lumière (2) et **en ce que** la portée d'éclairage de l'émission de lumière de la première source de lumière (1) peut être diminuée en continu ou graduellement lors de la désactivation de la deuxième source de lumière (2).
